# EUROPEAN PATENT APPLICATION

(11) **EP 1 550 833 A2**
(43) Date of publication of application: **06.07.2005**
(21) Application number: 04106813.1
(22) Date of filing: 21.12.2004
(51) Int. Cl.: F26B 25/00

(54) **Loading/discharge device for process apparatus**

(30) Priority: 30.12.2003 IT TO20031052
(71) Applicant: Debolini, Paolo, 10128 Torino (IT)
(72) Inventor: Debolini, Paolo, 10128 Torino (IT)
(74) Representative: Gerbino, Angelo

(57) **Abstract**

The loading/discharge device (26, 26a) comprises a duct (28) including a portion which is formed as a flexible coupling (32) that is provided with actuator means (34) for performing extension/contraction movements and selective closure means disposed in a cross-section of the duct. The ends of the duct (28) are provided with means for leaktight coupling with respective openings (12, 20) of the process apparatus and of a storage container (18, 18a). Moreover, a portion of the duct (28) which is intended to be directed towards the process apparatus in operation is provided with washing means.

## Description

The present invention relates to a loading/discharge device for process apparatus, in particular for apparatus used for drying substances that are processed in the chemical, pharmaceutical, and food industries, and the like.

Typically, the apparatus comprises a housing that defines a chamber which contains the substance to be dried and which can rotate about a substantially horizontal axis. Moreover, an opening is formed in the housing and is provided with selective shutoff means allowing substances which are to be treated or which have been treated to be loaded/discharged from/into further storage containers in turn having respective openings provided with selective shutoff means.

A known loading/discharge device comprises a duct including a portion which is formed as a flexible coupling that is provided with actuator means for performing extension/contraction movements and selective closure means disposed in a cross-section of the coupling, the ends of the duct having means for leaktight coupling with the openings of the process apparatus and of the storage container.

In order to perform the loading/discharge operations, the above-mentioned device is interposed in a leaktight manner between the openings of the storage container and of the process apparatus and the closure and shutoff means are then opened to permit a flow of the substance processed. Upon completion of this operation, the closure and shutoff means are returned to the closure position and the loading/discharge device is separated from the process apparatus.

However, traces of the loaded/unloaded substance remain on the opening of the process apparatus, outside the shutoff means; if these traces are not removed, they are subsequently dispersed into the environment during the rotation of the apparatus with considerable risks of damage to the environment or to human health when toxic or pollutant substances are being treated.

The object of the present invention is to provide a loading/discharge device which can prevent the above-mentioned risks from arising.

According to the invention, this object is achieved by means of a loading/discharge device having the characteristics referred to specifically in appended Claim 1. Preferred embodiments of the invention are described in the appended dependent claims.

Advantages and characteristics of the present invention will become clear from the following detailed description which is given by way of non-limiting example with reference to the appended drawings, in which:
Figures 1 to 3 show successive steps of a loading procedure performed with the use of a device of the invention, and
Figures 4 to 6 show successive steps of a discharge procedure performed with the use of a further device according to the invention.

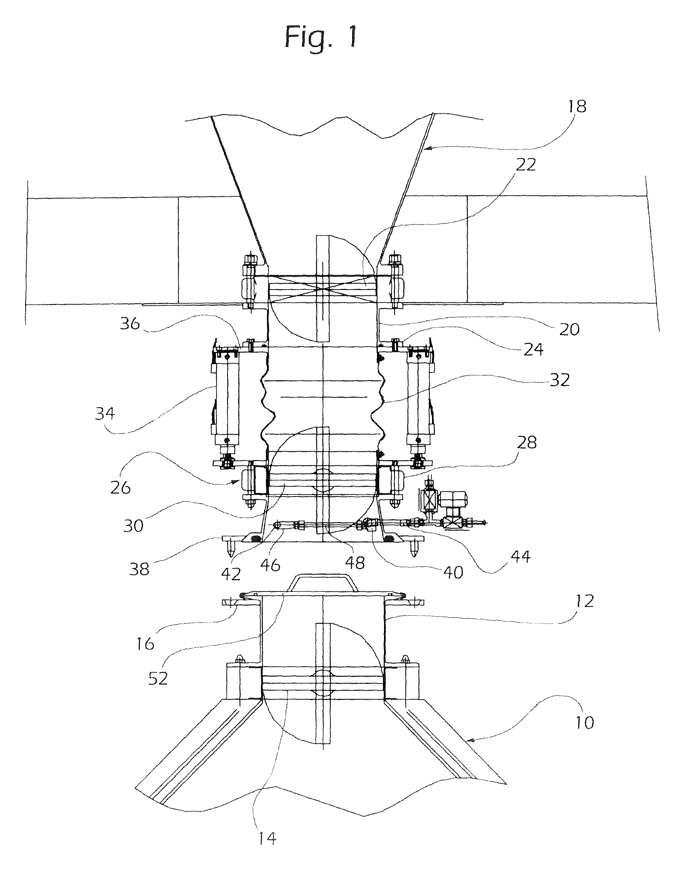

In Figures 1-3, a process apparatus such as a conventional biconical drier is indicated 10. The drier 10 comprises, in a known manner not described in detail herein, an outer housing defining in its interior a chamber which contains the substance to be dried and which can rotate about a substantially horizontal axis. For simplicity, the drawings show only the top portion of the drier 10.

The drier 10 has an opening 12 which is provided with selective shutoff means such as a butterfly valve 14 and which has a flange 16 at its distal end.

A hopper-like container for the storage of the substance to be loaded into the drier 10 is indicated 18 in Figures 1-3. The hopper-like container 18 has a discharge opening 20 which is provided with selective shutoff means such as a butterfly valve 22 and which has a flange 24 at its distal end 24.

A loading device indicated 26 in Figures 1-3 comprises a duct 28 including selective closure means such as a butterfly valve 30 and an intermediate portion which is formed as a flexible coupling 32 and which has actuator means for performing extension/contraction movements. The actuator means 34 are conventional and, for example, take the form of pneumatic or oleodynamic jacks. The duct 28 also has flanges 36, 38 at its ends to permit leaktight coupling with the respective flanges 24, 16 of the openings 20, 12 of the hopper-like container 18 and of the drier 10.

The portion of the duct 28 which is disposed between the butterfly valve 30 and the lower, distal end of the duct is provided with washing means. The washing means include a first hole and a second hole 40, 42 which are formed through the side wall of the duct 28 and through which a washing-liquid inlet tube 44 and a washing-liquid outlet tube 46 extend, respectively.

The outlet tube 46 comprises an initial portion 48 which is located in the portion of the duct 28 that is directed towards the drier 10 and the spatial orientation of which is adjustable. The end of the inlet tube 44 which projects into the duct 28 is provided with a spray head 50.

Figure 1 shows the loading device 26 connected to the hopper-like container 18 by the coupling of the respective end flanges 36, 24. The drier 10 is separated from the above-mentioned elements and is in its normal operative configuration with the opening 12 closed by a removable cover 52.

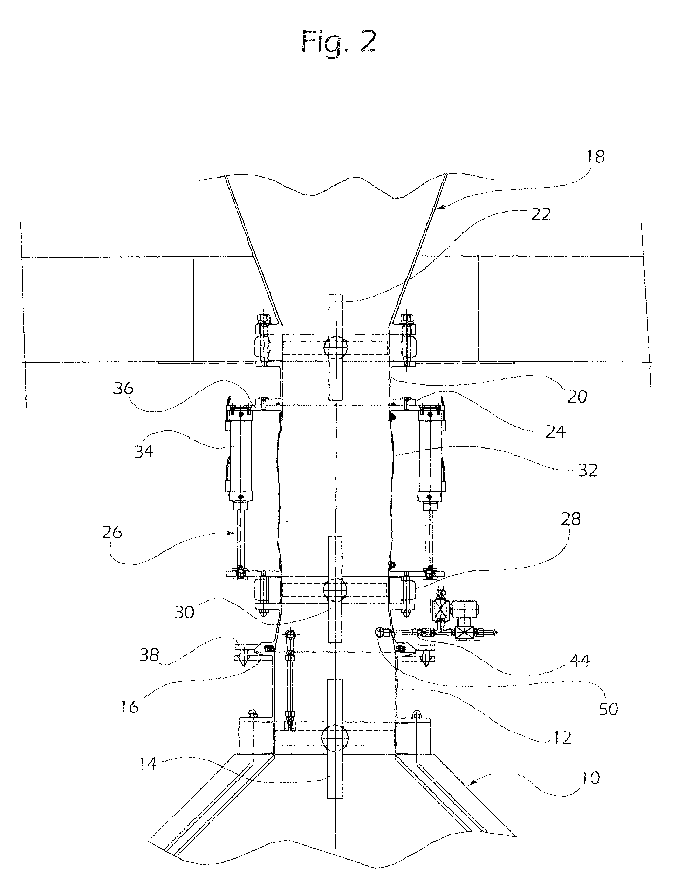

In order to load the substance stored in the hopper-like container 18 into the drier 10, the flexible coupling 32 of the duct 28 is caused to extend by means of the jacks until its flange 38 is brought into abutment with the flange 16 of the drier 10, from which the cover 52 has been removed (Figure 2). The flanges 38, 16 can thus be coupled in a leaktight manner so that a continuous passageway, isolated from the outside environment, is formed between the hopper-like container 18 and the drier 10; once the butterfly valves 14, 22, 30 have been opened, this passageway permits the discharge by gravity of the substance to be transferred.

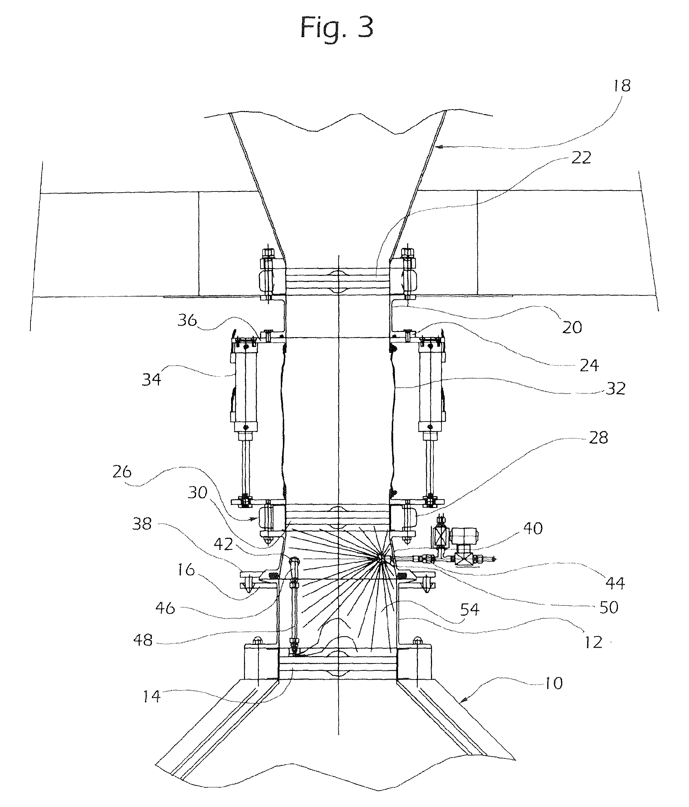

Upon completion of this operation, before the loading device 26 is separated from the drier 10 again, the space 54 which is defined between the re-closed valves 30 and 14, including the end regions adjacent the duct 28 and the opening 12 of the drier 10, is washed (Figure 3). For this purpose, cleaning liquid from a reservoir not shown in the drawings is conveyed by the tube 44 and is sprayed into the space 54 through the head 50. The cleaning liquid is discharged through the outlet tube 46, the initial portion 48 of which has previously been placed in a substantially vertical arrangement. The connection of the outlet tube 46 to an external environment which is at reduced pressure, enables the cleaning liquid to be discharged from the space 54 with the use of an effect similar to the "siphon" effect. The length of the initial portion 48 is advantageously such that it extends very close to the bottom of the space 54 which is constituted by the closed shutter of the butterfly valve 14 so that the discharge is as complete as possible.

Upon completion of the washing, the device 26 can be separated from the drier 10 by disconnection of the flanges 38, 16 and can be brought to a non-operative configuration by retracting the flexible coupling 32 and placing the initial portion 48 of the tube 46 in a substantially horizontal position so that it does not interfere with the opening 12 of the drier 10 during the rotation thereof.

The washing completely clears the residues of the substance loaded from the regions of the opening 12 of the drier 10 which may come into communication with the outside environment after the disconnection of the device 26. Any risk of contamination of the environment or of damage to human health is consequently prevented.

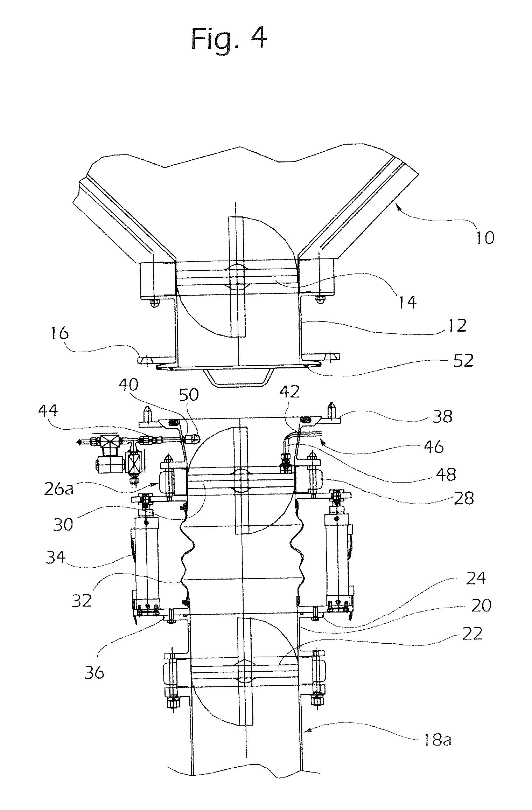

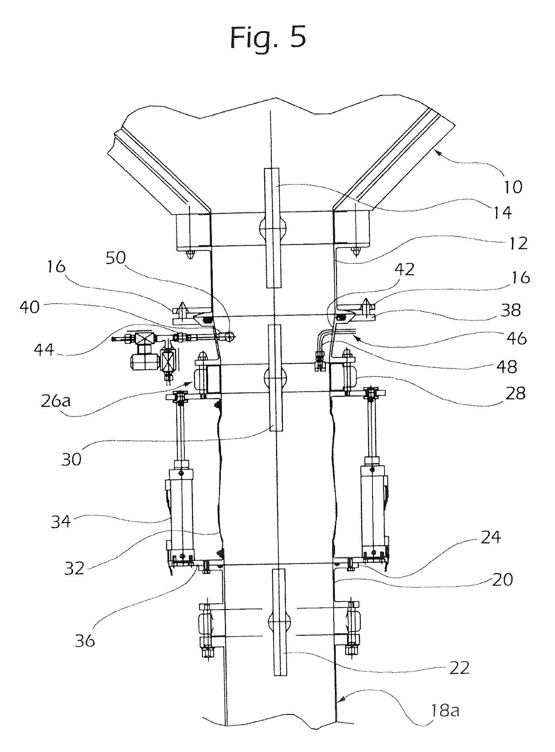

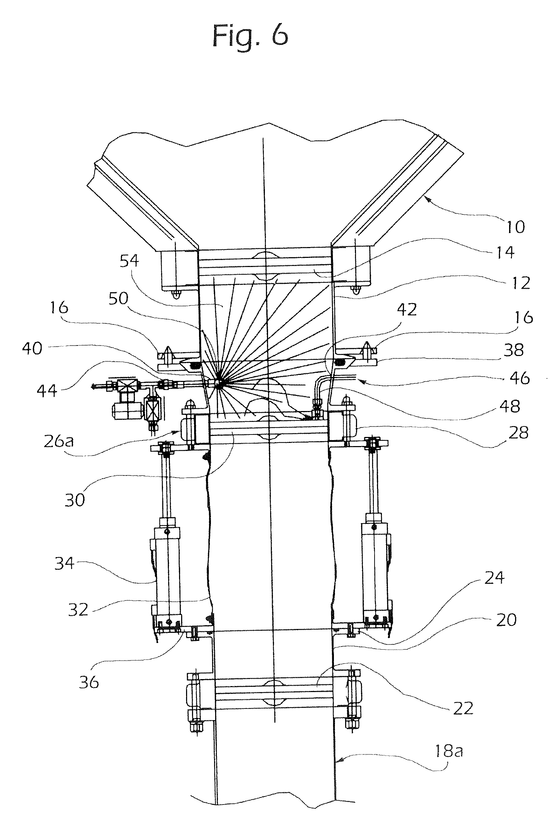

Figures 4 to 6 show a further embodiment of the invention in which the same numbers that were used with reference to the preceding drawings identify identical or equivalent parts.

These latter drawings show a discharge device 26a rather than a loading device, interposed between a drier 10 similar to that described above and a container 18a for collecting the dried substance, the opening 12 of which has a structure similar to that of the hopper-like container 18 described above. The structure of the discharge device 26a is also substantially equivalent to that of the loading device 26 described above, with the sole difference that the initial portion 48 of the outlet tube 46 is not orientable. In fact, the discharge device 26a is disposed beneath rather than above the drier 10 so that gravity can be utilized to effect the transfer of the dried substance. The bottom of the space 54 to be washed is therefore constituted by the closed shutter of the butterfly valve 30 of the duct 28 so that the initial portion 48 of the tube 46 can be arranged permanently in a vertical arrangement in which it extends very close to the shutter of the valve 30 when the shutter is in the closure position.

Operations to transfer the dried substance and washing operations are substantially similar to those described above, the operative configurations shown in Figures 4-6 corresponding to those of Figures 1-3, respectively. In this case again, the washing completely clears the residues of the discharged substance from the regions of the opening 12 of the drier 10 which may come into communication with the outside environment after the disconnection of the device 26a. Any risk of contamination of the environment or damage to human health is thus prevented.

Naturally, the principle of the invention remaining the same, the details of construction and forms of embodiment may vary widely with respect to those described purely by way of example without thereby departing from its scope.

## Claims

1. A loading/discharge device (26, 26a) for a rotary process apparatus, the device comprising a duct (28) including a portion which is formed as a flexible coupling (32) that is provided with actuator means (34) for performing extension/contraction movements and selective closure means disposed in a cross-section of the duct, the ends of the duct (28) being provided with means for leaktight coupling with respective openings (12, 20) of the process apparatus and of a storage container (18, 18a),
the device being **characterized in that** at least a portion of the duct (28) which is intended to be directed towards the process apparatus in operation is provided with washing means.

2. A loading/discharge device (26, 26a) according to Claim 1, **characterized in that** the washing means include a first hole (40) through the wall of the duct (28) for the inlet of a washing liquid and a second hole (42) for the outlet of the washing liquid.

3. A loading/discharge device (26, 26a) according to Claim 2, **characterized in that** a washing-liquid inlet tube (44) extends through the first hole (40) and a washing-liquid outlet tube (46) extends through the second hole (42).

4. A loading/discharge device (26) according to Claim 3, **characterized in that** the outlet tube (46) comprises an initial portion (48) the orientation of which is adjustable.

5. A loading/discharge device (26) according to Claim 4, **characterized in that** the spatial orientation of the initial portion (48) is adjustable between a first, substantially vertical arrangement and a second, substantially horizontal arrangement.

6. A loading/discharge device (26, 26a) according to any one of preceding claims 3 to 5, **characterized in that** the end of the inlet tube (44) which projects into the duct (28) has a spray head (50).

7. A loading/discharge device (26) according to Claim 5, **characterized in that** the initial portion (48) of the outlet tube (46) has a length such that, in the vertical configuration, its free end projects beyond the end of the duct (28) so that, when the device (26) is connected to the process apparatus, the free end can extend very close to the surface of the closed shutter of a valve which closes the opening (12) of the process apparatus.
